# EUROPEAN PATENT APPLICATION

(11) **EP 0 927 850 A2**
(43) Date of publication of application: **07.07.1999**
(21) Application number: 98830770.8
(22) Date of filing: 22.12.1998
(51) Int. Cl.: F16L 37/48

(54) **Member for the quick mounting of a gum springkler or the like onto a tap**

(30) Priority: 24.12.1997 IT MI970923 U
(71) Applicant: Fagnani, Paolo, Cassano d'Adda (Milano) (IT)
(72) Inventor: Fagnani, Paolo, Cassano d'Adda (Milano) (IT)
(74) Representative: Concone, Emanuele

(57) **Abstract**

A member for the quick mounting of a gum sprinkler or the like onto a tap consists of a cylindrical body (1) having formed at the top thereof an internal seat (2) for a filter (F) and an external thread (3), the cylindrical body (1) extending in height for a length greater than that required to house said filter (F) and having on its internal surface, in the lower portion thereof, a pair of opposite teeth (4) for the bayonet coupling of a connection provided with suitably shaped seats.

## Description

The present invention relates to components for taps and fittings, and in particular to a member suitable to allow the quick mounting of a gum sprinkler or the like onto a tap.

It is known that taps are usually provided at the water outlet mouth with a filter-holding member containing a filter which can carry out a double function. In addition to carrying out the usual filtering function to retain the particles present in the water, the filter also allows the controlled clearing of air bubbles possibly present in the pipes.

Said filter/aerator is retained in its position by the filter-holder, which is secured into a suitable seat at the tap mouth by means of an external thread engaging a corresponding internal thread formed in said seat. Most of the taps have a filter-holder seat standardized according to the EN 817 standard which provides a M 24 x 1 - 6H or a M 28 x 1 - 6H thread.

There are also known devices for the oral hygiene such as gum sprinklers, toothbrushes with or without a mobile head, and the like which are driven simply by the pressure of the water stream. Such a device essentially includes a flexible duct provided at one end with a first fitting for the connection to a handle provided with a snap-on coupling for the mounting of an accessory for the cleaning of the oral cavity, and at the other end with a second fitting for the connection to a nipple suitable to achieve a water-tight mounting of the duct onto a tap or the like.

This type of very simple and effective device has however the drawback that the mounting onto the tap is not easy. In fact, if the above-mentioned nipple is of the externally threaded type, so that it can replace the original filter-holder, there are two significant disadvantages. A first disadvantage is caused by the difficulty and waste of time implied in that every time it is necessary to unscrew the filter-holder, to screw on the nipple and then, at the end of the use, to unscrew the nipple and to screw back on the filter-holder. A second disadvantage comes from the wear of the female thread on the tap, since the filter-holder is designed to be unscrewed and screwed back on only periodically and not with a daily or almost daily frequency as would occur in such a case.

As an alternative, it is possible to use a connection which fits over the filter-holder present on the tap. An example of such a device is disclosed in the patent application EP-672393 which shows a mounting onto the tap achieved through a bowl with a strap fastening and a flange tightening. Besides the tightness problems that such a solution may have, it is clear that this kind of connection is rather bulky, difficult to adapt to any kind of tap and also implies a certain difficulty and waste of time for the mounting thereof.

Therefore the object of the present invention is to provide a mounting member suitable to overcome the above-mentioned drawbacks.

This object is achieved by means of a member having the characteristics disclosed in claim 1.

A first fundamental advantage of the present member is that it allows the connection of the sprinkling device in a quick and simple manner without requiring every time the mounting and dismounting of said member. Moreover, the functionality of the tap remains unchanged even when the member is left installed.

A second significant advantage is the very little cost and bulkiness of said member, which is also easily adapted to most of the taps.

These and other advantages and characteristics of the member according to the present invention will be clear to those skilled in the art from the following detailed description of an embodiment thereof, with reference to the annexed drawings wherein:

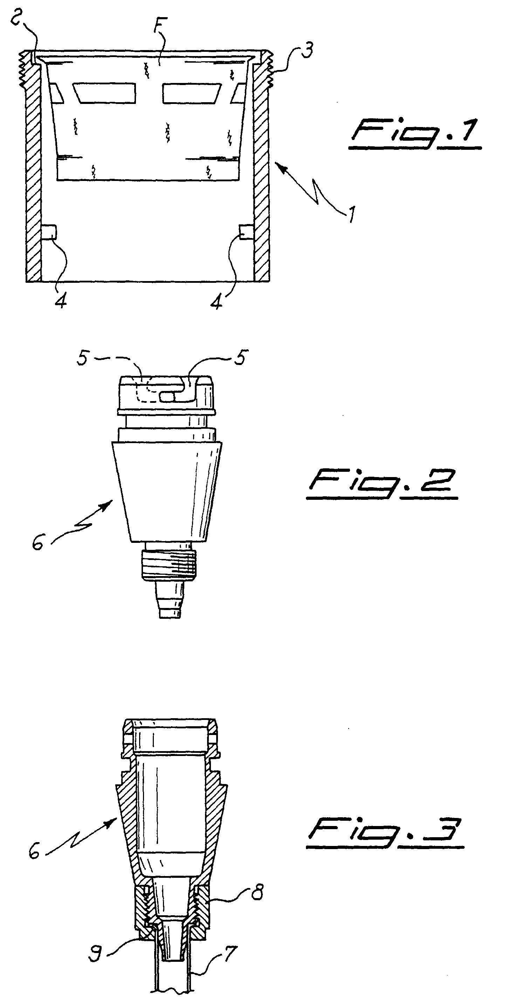

Fig.1 is a diagrammatic enlarged view of the vertical section of the present member with the filter/aerator of the tap inserted therein;
Fig.2 is a diagrammatic front view of a connection designed for bayonet coupling into said member of fig.1; and
Fig.3 is a diagrammatic view of the vertical section of the connection of fig.2 having fitted thereon a duct for supplying water to a sprinkling nozzle.

With reference to said figures, there is seen that the member according to the present invention consists of a cylindrical body 1 having formed at the top thereof an internal seat 2 for a filter/aerator F of known type, and an external thread 3 for engaging a female thread present on the tap. For the sake of adaptability as mentioned above, the thread 3 preferably meets the cited EN 817 standard, but it is clear that other types of thread can be use for specific needs.

The cylindrical body 1 extends in height for a length greater than that required to house the filter F. On the internal surface of the body 1, in the lower portion thereof there are formed a pair of opposite teeth 4. These teeth 4 are suitable to engage corresponding L-shaped seats 5 located at opposite positions on the external surface at the top of a connection 6. The distance between the teeth 4 and the bottom of the filter F, as well as the depth of the seats 5, allow the bayonet coupling of the connection 6 onto the body 1 by means of a simple axial rotation of about 90°. The disengaging is also as simple by means of a reverse movement.

In this way, a flexible duct 7 fitted onto the connection 6, for example by means of a nut 8 tightening it onto an abutment 9 at the opposite end, is water-tightly connected to the tap mouth and is able to supply water to a nozzle for interdental cleaning or to other types of sprinklers.

Therefore it is clear that once the original filter-holder of the tap has been replaced by the member according to the invention, all the intended objects are achieved. The mounting and dismounting of the sprinkling device are easy and quick, and the member also carries out the function of the filter-holder without any difference with respect to the removed original filter-holder.

It is clear that the above-described and illustrated embodiment of the member according to the invention is just an example susceptible of various modifications. In particular, the exact size and arrangement of the seat 2, of the thread 3 and of the teeth 4 may be changed in order to adapt to specific coupling needs. For example, the teeth 4 could be formed on the connection 6 and the corresponding seats 5 on the internal surface of the body 1, thus reversing their arrangement.

Furthermore, the teeth 4 can be replaced by other mechanically equivalent coupling means suitable to engage corresponding seats. For example, the teeth 4 could extend along a significant portion of the internal periphery of the body 1, so as to achieve a wider coupling.

## Claims

1. A member for the quick mounting of a gum sprinkler or the like onto a tap, characterized in that it consists of a cylindrical body (1) having formed at the top thereof an internal seat (2) for a filter (F) and an external thread (3), said cylindrical body (1) extending in height for a length greater than that required to house said filter (F) and having on its internal surface, in the lower portion thereof, means (4, 5) for the quick mounting of a connection (6) provided with corresponding engaging means.

2. A member according to claim 1, characterized in that said mounting means consist of a pair of opposite teeth (4) suitable to engage corresponding opposite L-shaped seats (5).

3. A member according to claim 2, characterized in that the teeth (4) are formed on the body (1) while the L-shaped seats (5) are formed on the connection (6).

4. A member according to claim 2, characterized in that the teeth (4) are formed on the connection (6) while the L-shaped seats (5) are formed on the body (1).

5. A member according to one or more of the preceding claims, characterized in that the external thread (3) is a M 24 x 1 - 6H or a M 28 x 1 -6H thread.
